# EUROPÄISCHE PATENTSCHRIFT

(11) **EP 1 268 268 B1**
(45) Veröffentlichungstag und Bekanntmachung des Hinweises auf die Patenterteilung: **11.02.2004**
(21) Anmeldenummer: 01929460.2
(22) Anmeldetag: 27.03.2001
(51) Int. Cl.: B63B 35/44, B63C 11/48

(54) **SCHWIMMKÖRPER**
FLOATING BODY
CORPS FLOTTANT

(30) Priorität: 31.03.2000 DE 10015990
(43) Veröffentlichungstag der Anmeldung: 02.01.2003
(73) Patentinhaber: Wippermann, Gerhard, 41068 Mönchengladbach (DE)
(72) Erfinder: Wippermann, Gerhard, 41068 Mönchengladbach (DE)
(74) Vertreter: Grundmann, Dirk, Dr.
(86) Internationale Anmeldenummer: PCT/EP2001/003462
(87) Internationale Veröffentlichungsnummer: WO 2001/072583

(56) Entgegenhaltungen:
- WO-A-81/01539
- DE-U- 29 819 997
- FR-A- 2 621 004
- US-A- 3 708 991
- US-A- 4 554 883
- US-A- 5 988 088

## Beschreibung

Die Erfindung betrifft einen Schwimmkörper, insbesondere als Träger eines Unterwassertunnels.

Auf dem Freizeitsektor sind Schwimmkörper bekannt, welche eine unterhalb der Wasserlinie liegende Kabine, Unterwassertunnel etc. aus transparentem Material aufweisen. Bevorzugt kann von dort beispielsweise die Wasserfauna beobachtet werden. In ihrem Aufbau sind derartige Schwimmkörper bootförmig gestaltet, und mittels Muskel- oder Motorantrieb lässt sich der entsprechende Schwimmkörper bewegen.

Aus der US-A-3 708 991 ist ein Schwimmkörper mit einem zwischen zwei Niedergangsschächten sich erstreckenden, unter der Wasserlinie liegender Tunnel mit teilweise transparenter Wand bekannt.

Dem Gegenstand der Erfindung liegt die Aufgabe zugrunde, einen Schwimmkörper der in Rede stehenden Art gebrauchsstabil auszugestalten derart, dass er eine größere Anzahl von Personen aufzunehmen vermag und dennoch eine optimale Beobachtung beispielsweise der Wasserfauna gestattet.

Diese Aufgabe ist zunächst und im Wesentlichen bei einem Schwimmkörper mit den Merkmalen des Anspruchs 1

Zufolge derartiger Ausgestaltung ist ein gattungsgemäßer Schwimmkörper neben einer besonders tragfähigen Konstruktion von hohem Freizeitwert angegeben, der eine größere Anzahl von Personen aufzunehmen vermag. Ein wesentlicher Bestandteil des Schwimmkörpers ist das biegesteife Rahmentragwerk. Es ist in Form eines horizontalen Gitters gestaltet. Die Gitteröffnungen bzw. Gitterfreiräume sind dazu genutzt, die entsprechenden Hohlkörper aufzunehmen. Hier bieten sich verschiedene Möglichkeiten an, die Hohlkörper einzusetzen. Sie können beispielsweise als Tanks, Auftriebskörper, Ballastkörper, Staukammern oder dergleichen dienen. Der Schwimmkörper selbst zeichnet sich durch zwei unter die Wasserlinie führende, voneinander beabstandete Niedergangsschächte aus, die mit einem unter der Wasserlinie liegenden Tunnel mit zumindest teilweise transparenter Wand miteinander verbunden sind. Dadurch ist der Schwimmkörper beispielsweise für einen vorgeschriebenen Durchgangsverkehr geeignet. In den unter die Wasserlinie liegenden Tunnel gelangt man vorzugsweise durch den einen Niedergangsschacht. Nach einer gewissen Verweildauer innerhalb des Tunnels kann man diesen über den anderen Niedergangsschacht verlassen, so dass in gewisser Hinsicht ein Kreislauf durchwandert wird. Der mit zumindest teilweise transparenter Wand ausgestattete Tunnel erlaubt dabei eine wohlfeile Beobachtung der unterhalb der Wasserlinie liegenden Wasserwelt. Sodann wird durch den die beiden Niedergangsschächte verbindenden Tunnel eine zusätzliche Stabilisierung des Schwimmkörpers realisiert, so dass dies auch zu einem erhöhten Sicherheitswert führt. Darüber hinaus bringt die Verwendung der beiden voneinander beabstandeten Niedergangsschächte durch den Tunnel belüftungstechnische Vorteile, was den Aufenthalt innerhalb des Tunnels sehr angenehm gestaltet. Es wird nämlich in gewisser Hinsicht eine Zwangsbelüftung realisiert. Das erfindungsgemäße Konzept gestattet es insbesondere, den Schwimmkörper in Rahmenform zu gestalten, und zwar unter Umgrenzung einer Wasserfreifläche. Die Niedergangsschächte sind dabei zwei einander gegenüberliegenden Rahmenabschnitten zugeordnet. Die Niedergangsschächte mit dem sie verbindenden Tunnel, welcher die Wasserfreifläche unterquert, stabilisieren diese Rahmenform. Die Oberfläche der Rahmenabschnitte kann dabei als Aufenthaltsfläche herangezogen werden, indem sie beispielsweise Liegestühle, Tische etc. aufnimmt. Außerdem kann man auch ohne Benutzung des Tunnels von einem zum anderen Niedergangsschacht gelangen. Sodann führt die Rahmenform zu einer Stabilisierung des Schwimmverhaltens des Schwimmkörpers, so dass dieser auch bei höhergehender See relativ ruhig steht. Einen optimalen Beobachtungswert erhält der innerhalb des Tunnels befindliche Besucher dadurch, dass der Tunnel einen transparenten Boden besitzt. Optimiert wird der Beobachtungswert dadurch, dass die Tunnelwand insgesamt durchsichtig ist. Es ist dadurch eine allseitige Rundumsicht geschaffen, wie sie beispielsweise bei auf dem Freizeitsektor befindlichen U-Booten nicht anzutreffen ist. Bautechnische Vorteile resultieren daraus, dass der Tunnel aus einem Bogenstück und einem geraden Bodenstück jeweils aus durchsichtigem Kunststoff besteht. Dieses Material gestattet eine Tunnellänge von ca. 10 m. Die Tunnelwandstärke dagegen kann ca. 10 cm sein. Trotz dieser relativ großen Länge ergibt sich eine hochfeste Konstruktion, die hohen Kräften Widerstand zu bieten vermag. Um eine hochfeste Verbindung des Tunnels mit den Niedergangsschächten zu gewährleisten, ist der Tunnel mit den Niedergangsschächten mittels Flansche verschraubt, welche Flansche die Auftriebskräfte aufnehmen. Dies ist sehr bedeutsam, da der relativ volumengroße Tunnel als Auftriebskörper wirkt. Im Detail sieht dies so aus, dass die Flansche in den Kunststoff eingegossene Stahl-Befestigungselemente ausbilden. Mittels Verschraubung lässt sich dadurch eine hochstabile Verbindung zwischen den Niedergangsschächten und dem Tunnel erzeugen. Um nicht nur im Bereich des Tunnels einen Beobachtungseffekt zu erhalten, sondern auch im Bereich der Niedergangsschächte, besteht zumindest der unter der Wasserlinie liegende Bereich des Niedergangsschachtes aus durchsichtigem Kunststoff. Es besteht also Materialeinheitlichkeit zwischen Tunnel und Niedergangsschacht, was zu konstruktiven Vorteilen führt. Vorteile hinsichtlich der Stabilität werden ferner dadurch erzielt, dass die Stirnseite des Tunnels in einer formangepassten Ausnehmung der Niedergangs-Schachtwand einliegt. Um bei geringem Raumbedarf von der Plattform des Schwimmkörpers zum Tunnel zu gelangen, sind die Niedergangsschächte mit Wendeltreppen insbesondere aus durchsichtigem Kunststoff ausgestattet. Auch hier ist wiederum bewirkt, dass die insbesondere aus durchsichtigem Kunststoff bestehenden Wendeltreppen nur zu einer unwesentlichen Sichtbeeinträchtigung führen. Hervorzuheben ist ferner der Sachverhalt, einen etwa in Tunnelmitte angeordneten, querschnittsvergrößerten Raum vorzusehen. Es können sich demzufolge dort mehr Personen aufhalten. Auch gestattet dieser querschnittsvergrößerte Raum beispielweise die Unterbringung von Tischen nebst Stühlen. Um den auf den Tunnel wirkenden Auftriebskräften entgegenzuwirken, ist ein in Tunnelmitte angeordneter Ballastkörper vorgesehen. Dieser kann zum Beispiel eine auf dem Tunnel angeordnete Insel sein. Beispielsweise kann die Insel Pflanzen aufnehmen, so dass der Schwimmkörper ein wohlfeiles Aussehen erhält. Damit beispielsweise kein Regen in die Niedergangsschächte und damit in den Tunnel gelangt, sind die Niedergangsschächte von Kabinen überbaut. Herangezogen können die Kabinen ferner dazu sein, sanitäre Anlagen zu beinhalten. Der Schwimmkörper erhält sodann praktisch eine Unsinkbarkeit durch sich nahezu entlang des gesamten Rahmenumfanges erstreckende Auftriebskörper. Zur stabilen Schwimm- und Tragfähigkeit trägt der Sachverhalt bei, dass die Ballasttanks rahmeninnenseitige Hohlkörper sind. Befüllbar sind die Ballasttanks beispielsweise mittels Meerwasser und/oder Trinkwasser. Vorgesehen ist ferner, dass die Ballasttanks einzelne Kunststoff-Hohlkörper sind. Weiterhin kann der Schwimmkörper an der Oberseite klappenverschlossene Auftriebskammern beinhalten. Diese können beispielsweise als Aufbewahrungsräume für Utensilien des Schwimmkörpers dienen, und zwar bei Nichtbenutzung desselben. Bau- und transportechnische Vorteile resultieren daraus, dass der Schwimmkörper ein zerlegbares Gerüst aus Trägern aufweist. Die horizontal verlaufenden Träger tragen dabei die Ballasttanks. Zur Stabilisierung des zerlegbaren Gerüstes sind die Horizontalträger von als Knotenbleche ausgebildeten Vertikalträgern gestützt, welche an den Niedergangsschächten befestigt sind. Vorzugsweise sind die Knotenbleche gelocht gestaltet, so dass Reflektionen minimiert sind. Die Knotenbleche können jedoch auch in Rahmenform erstellt sein aus dem vorgenannten Grund. Schwimmtechnische Vorteile des Schwimmkörpers resultieren daraus, dass die Ballasttanks parallel zur Tunnelerstreckungsrichtung benachbart zu den Niedergangsschächten angeordnet sind. Ferner ist hervorzuheben, dass die Vertikalträger aus durchsichtigem Kunststoff bestehen. Zwecks Vergrößerung der Oberfläche des Schwimmkörpers ist vorgesehen, an den Außenseiten der Rahmenabschnitte angesetzte Plattformen anzuordnen. Die vorgenannten rahmenaußenliegenden Auftriebskörper können vorzugsweise aus geschäumtem Kunststoff bestehen. Sie können gewichtsmäßig sehr leicht gehalten werden und dennoch eine hohe Schwimmfähigkeit besitzen. Hinsichtlich des Transportes des rahmenartigen Schwimmkörpers erweist es sich von Vorteil, dass der gesamte Schwimmkörper in zerlegtem Zustand in mehreren 40-Fuß-Containern Platzaufnahme findet. Um dann beim Aufbau des Schwimmkörpers die Kabine stabil mit dem Niedergangsschacht verbinden zu können, ist der obere Rand des Niedergangsschachtes formschlüssig in eine Nut der Kabinenwand eingeklebt. Zur Bildung des Schwimmkörpers dient ein solcher, welcher aus einer Vielzahl von Einzelelementen besteht, welche an Vertikalflächen miteinander verbunden sind und die Form quaderförmiger Hohlkörper aufweisen. Stabilisiert werden diese durch in ihnen angeordnete, geradlinig verlaufende, in voneinander verschiedene Vertikalflächen mündende Rohre als druckbeaufschlagbare Distanz-Stabilisierungs-Elemente, wobei durch zumindest zwei zueinander fluchtenden Rohren zweier Einzelelemente ein Spannelement hindurchgeführt ist. Der gesamte Schwimmkörper lässt sich daher in Baukastenbauweise aus den Hohlkörpern zusammensetzen, welche ihrerseits ihre Stabilisierung durch die Rohre erhalten. Es bietet sich zwecks günstiger Herstellung an, die Einzelelemente aus Kunststoff zu fertigen und sie im Rotationsverfahren herzustellen. Bei diesem werden sowohl die Außenwände als auch die Rohre erzeugt. Es ist sogar möglich, dass die Rohre schräg verlaufen, also diagonal zur Längsrichtung der Einzelelemente. Es lässt sich hierdurch ein gitterartiges Verbundsystem schaffen, verbunden mit einer besonders hohen Stabilität des Schwimmkörpers. Möglich ist es sogar, mehrere, sich kreuzende Rohre vorzusehen, und zwar unter Berücksichtigung unterschiedlicher Ebenen. Es können dabei einander formgleiche Einzelelemente unterschiedliche Funktionen erhalten. Werden sie beispielsweise ausgeschäumt, dienen sie als Schwimmhohlkörper. Ferner können die Einzelelemente auffüllbare Ballasttanks oder mit einer Klappe versehene Stauräume sein. Erhöhbar ist die Einsatzpalette des Schwimmkörpers durch ein rund um den Schwimmkörper gelegtes, bis zum Meeresboden reichendes oder bodenseitig geschlossenes Netz. Auf dieser Basis ist es möglich, den Schwimmkörper als Delphinarium einzusetzen. Die Besucher können sich dabei ober- oder unterhalb der Wasserlinie in den entsprechenden Räumlichkeiten aufhalten. Auch ist von Vorteil, dass die randseitigen Einzelelemente einen Wellenbrecherwulst und darunterliegend eine Wellenausrollnische ausbilden. Es ist dadurch entgegengewirkt, dass die auf der Plattform des Schwimmkörpers befindlichen Personen bei normaler Wellenbewegung einer Spritzgefahr ausgesetzt ist. Der Sachverhalt, dass die die Gitterfreiräume einfassenden Gitterstege voneinander parallel beabstandete Ober- und Unterstreben aufweisen, deren Abstandslage durch den gitterkreuzungspunkten zugeordnete Vertikalstreben definiert ist und welche mittels Diagonalstreben versteift sind, führt zu einer hochbelasteten Ausgestaltung. Das auf diese Weise realisierte Rahmentragwerk erweist sich als besonders belastungsstabil, und zwar können die aus unterschiedlichen Richtungen einwirkenden Kräfte schadfrei aufgefangen werden. Stabilisierend wie auch gewichtssparend erweist sich die Maßnahme, dass die den Niedergangsschächten benachbarten und die die Wasserfreifläche begrenzenden Gitterstege aus Stahl, insbesondere Edelstahl, und die peripheren Gitterstege aus Fiberglas bestehen. Die quadratischen Gitterfreiräume können dabei so dimensioniert sein, dass sie jeweils zwei Hohlkörper aufzunehmen vermögen. Herstellungstechnische sowie stabilierende Vorteile ergeben sich aufgrund der Tatsache, dass der Tunnel und die Niedergangsschächte jeweils durchsichtig beplankte Stahlrahmen-Konstruktionen sind. Da vom Tunnel und den Niedergangsschächten erhebliche Auftriebskräfte ausgehen und diese aufgefangen werden müssen, ist die Maßnahme getroffen, dass die Niedergangsschächte jeweils mittels zweier seitlich abragender Tragzapfen die Auftriebskräfte in den Tragzapfen zugeordnete Joche des Rahmentragwerks ableiten. Zweck Vergrößerung der nutzbaren Oberfläche des Rahmentragwerks ist die Wasserfreifläche mit Platten abdeckbar. Diese zusätzliche, mit Platten abgedeckte Fläche kann beispielsweise dann als Tanzfläche etc. dienen. Die Halterung der Platten in ihrer die Wasserfreifläche abdeckenden Position geschieht mittels unter den Rändern des Rahmens bevorrateten, über die Wasserfreifläche verlagerbaren Trägern. Diese können mit an ihren Enden angeordneten Rollen über randseitige Schienen rollen, um aus ihrer Verstecklage in ihre Tragfunktionsstellung zu gelangen.

Nachstehend werden drei Ausführungsbeispiele der Erfindung anhand der Zeichnungen erläutert. Es zeigt:
- Fig. 1: eine Ansicht des Schwimmkörpers gemäß der ersten Ausführungsform,
- Fig. 2: eine klappfigürliche Seitenansicht der Fig. 1,
- Fig. 3: eine Draufsicht auf den Schwimmkörper,
- Fig. 4: den Schnitt nach der Linie IV-IV in Fig. 3, vergrößert dargestellt,
- Fig. 5: den Ausschnitt nach der Linie V-V in Fig. 4,
- Fig. 6: den Schnitt nach der Linie VI-VI in Fig. 4,
- Fig. 7: den Schnitt nach der Linie VII-VII in Fig. 1,
- Fig. 8: analog Fig. 4 eine Abwandlung des Schwimmkörpers,
- Fig. 9: den Schnitt nach der Linie IX-IX in Fig. 8,
- Fig. 10: eine Draufsicht auf den Schwimmkörper gemäß der zweiten Ausführungsform,
- Fig. 11: mehrere der gemäß der Ausführungsform nach Fig. 10 verwendeten quaderförmigen Hohlkörper in Ansicht, welche mittels Spannelemente untereinander verbunden sind,
- Fig. 12: eine Herausvergrößerung im Verbindungsbereich zweier Spannelemente,
- Fig. 13: in perspektivischer Darstellung einen ein Einzelelement darstellenden Hohlkörper,
- Fig. 14: einen Querschnitt durch einen rahmenaußenseitig befindlichen Auftriebskörper, welcher einen Wellenbrecherwulst und darunterliegend eine Wellenausrollnische ausbildet,
- Fig. 15: eine Ansicht des Schwimmkörpers gemäß der dritten Ausführungsform,
- Fig. 16: die klappfigürliche Seitenansicht der Figur 15,
- Fig. 17: eine Draufsicht auf das biegesteife Rahmentragwerk mit diesem zugeordneten Tunnel,
- Fig. 18: einen Ausschnitt des Rahmentragwerks in Perspektive,
- Fig. 19: eine teilweise Draufsicht des Rahmentragwerks mit diesem zugeordneten Hohlkörpern,
- Fig. 20: einen Längsschnitt durch einen halben Tunnel,
- Fig. 21: den Schnitt nach der Linie XXI-XXI in Figur 20,
- Fig. 22: den Schnitt nach der Linie XXII-XXII in Figur 20,
- Fig. 23: eine Draufsicht auf die die Wasserfreifläche abdeckenden Platten, welche von über die Wasserfreifläche verlagerbaren Trägern getragen sind,
- Fig. 24: den Schnitt nach der Linie XXIV-XXIV in Figur 23,
- Fig. 25: einen Ausschnitt nach XXV-XXV der Figur 25, vergrößert dargestellt,
- Fig. 26: eine Seitenansicht eines Hohlkörpers und
- Fig. 27: eine Draufsicht auf den Hohlkörper.

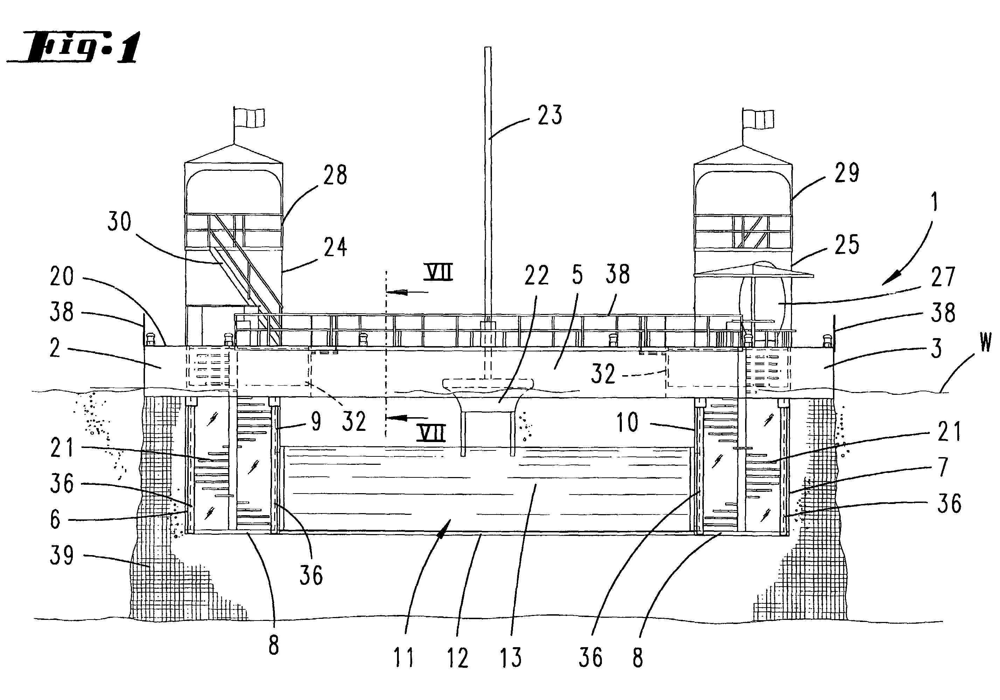

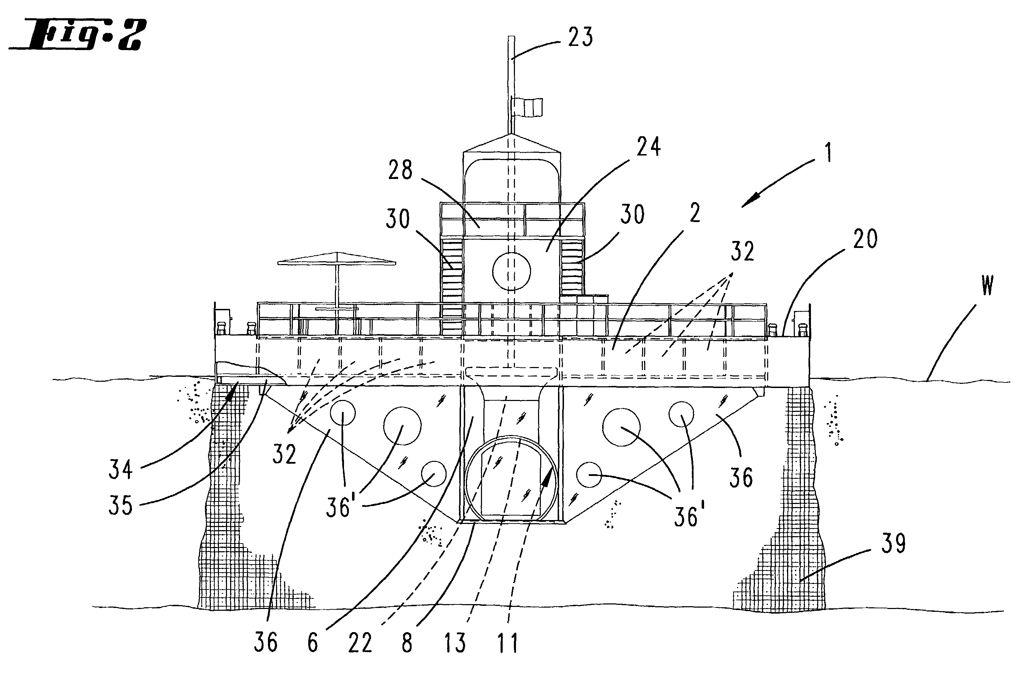

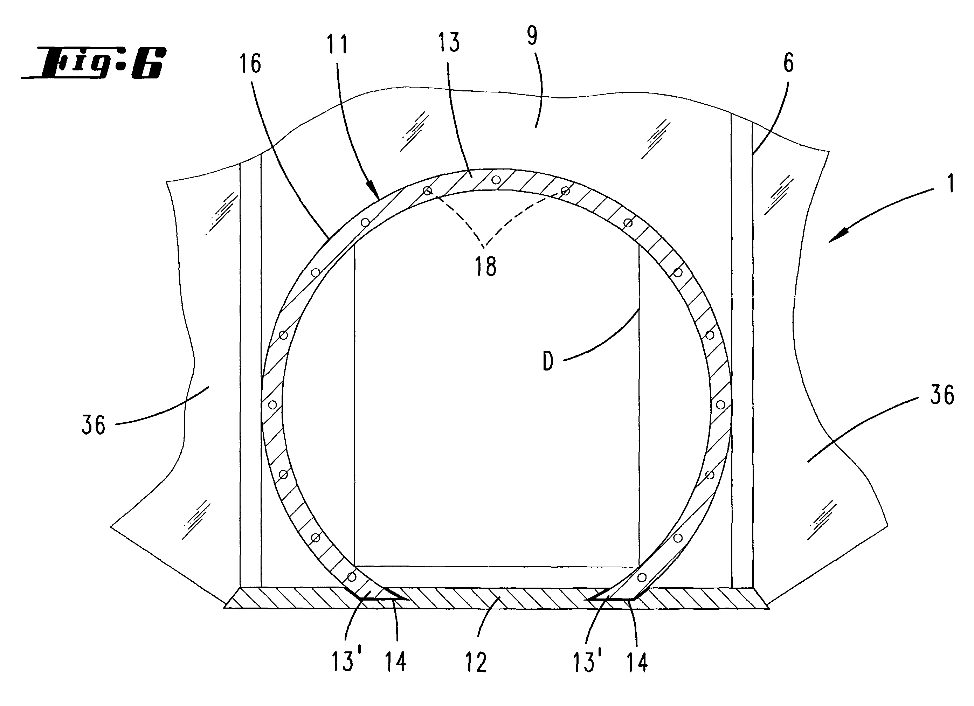

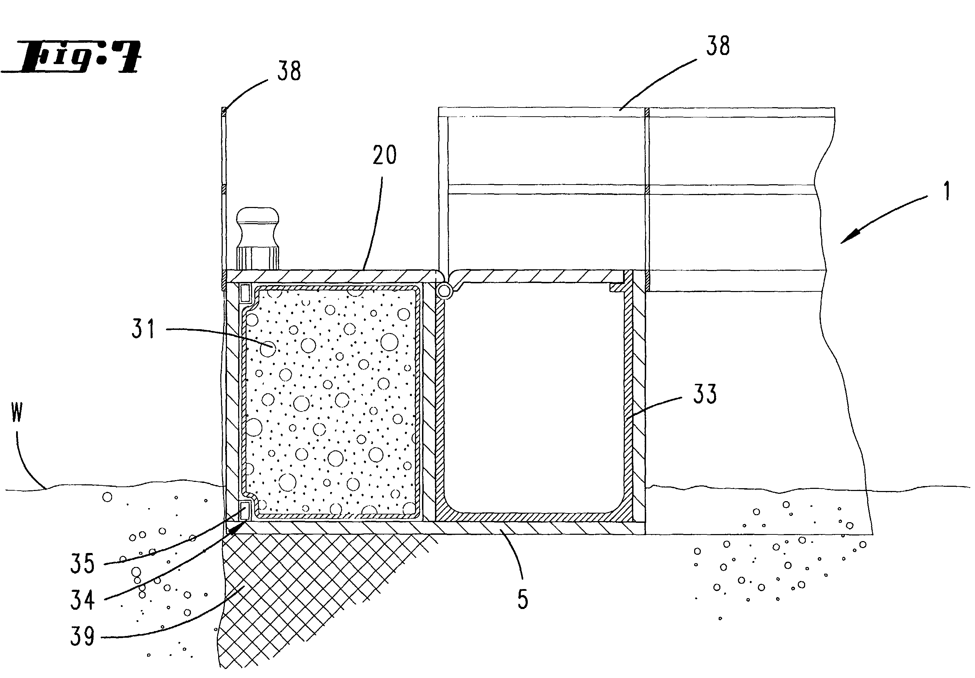

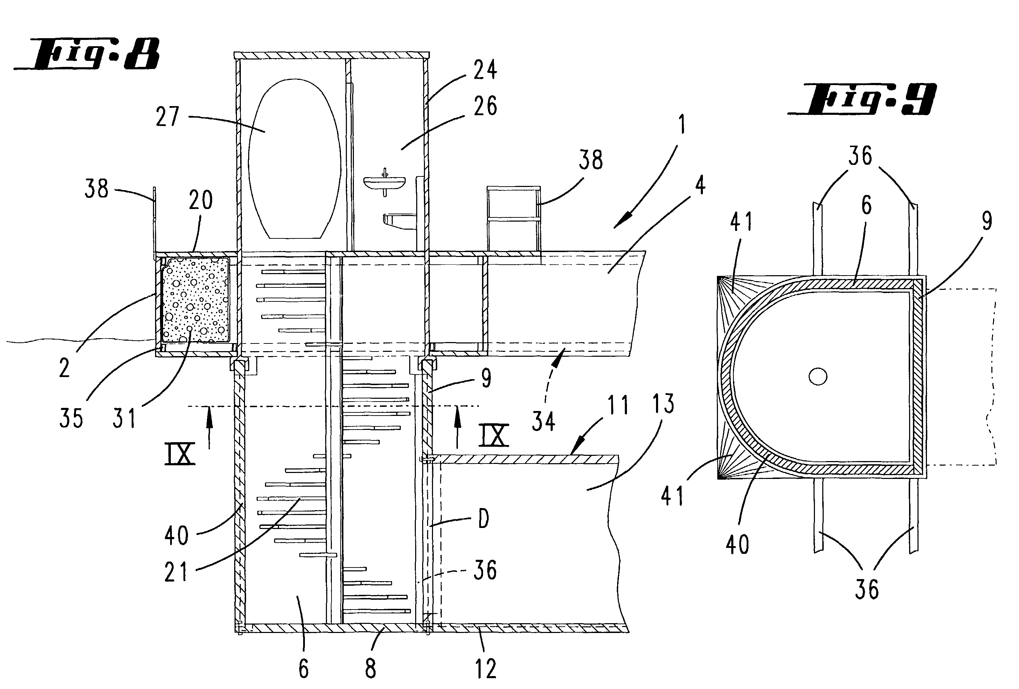

Der gemäß der ersten Ausführungsform in den Fig. 1 bis 7 veranschaulichte, als Ganzes mit der Ziffer 1 bezeichnete Schwimmkörper ist in Rahmenform erstellt und besitzt die sich jeweils gegenüberliegenden Rahmenabschnitte 2, 3 und 4, 5. Beim Ausführungsbeispiel ist vorgesehen, dass die Rahmenabschnitte 4, 5 länger sind als die Rahmenabschnitte 2, 3.

Mittig geht von den kürzeren Rahmenabschnitten 2, 3 je ein unter die Wasserlinie W führender Niedergangsschacht 6, 7 etwa quadratischen Grundrisses aus. Verschlossen ist dieser Niedergangsschacht 6, 7 durch einen Boden 8, so dass kein Wasser in den Niedergangsschacht 6, 7 einzudringen vermag.

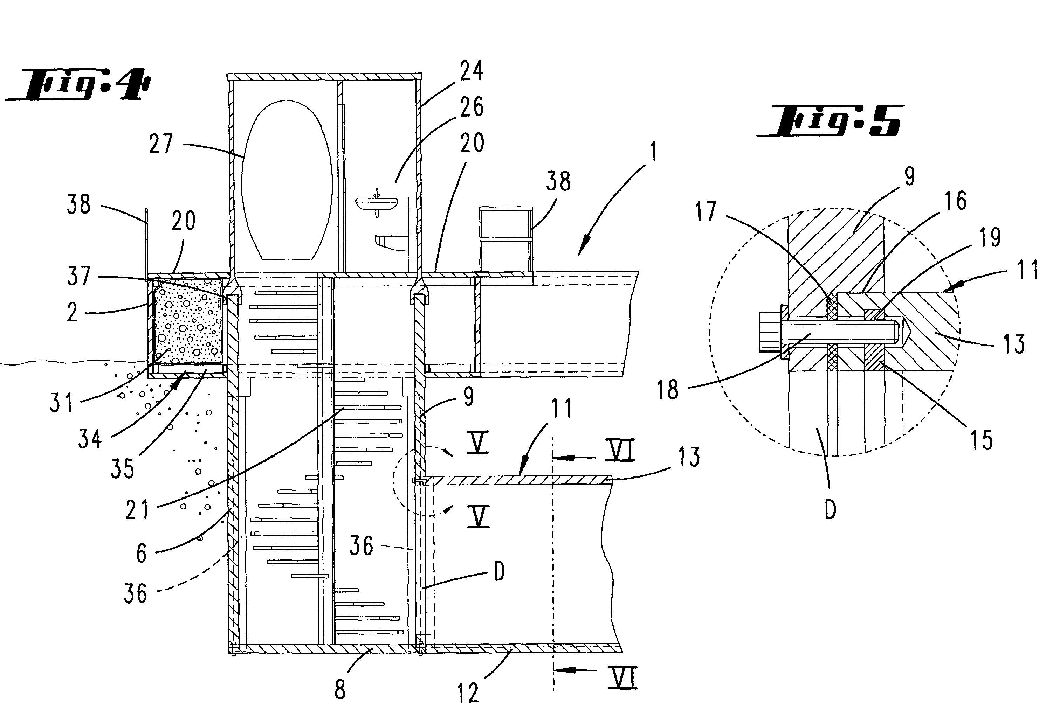

Die einander zugekehrten Seitenwände 9, 10 der Niedergangsschächte 6, 7 sind mit einem unterhalb der Wasserlinie W liegenden Tunnel 11 unter Belassung einer Durchgangsöffnung D miteinander verbunden. Der Tunnelboden 12 fluchtet dabei mit den Böden 8 der Niedergangsschächte 6, 7. Der Tunnel 11 ist gebildet aus einem Bogenstück 13 und dem geraden, den Tunnelboden 12 bildenden Bodenstück. Als Material für das Bogenstück 13 und das Bodenstück 12 dient durchsichtiger Kunststoff, beispielsweise Acrylglas mit einer Wandstärke von ca. 10 cm. Hergestellt werden kann das Bogenstück 13 beispielsweise durch Verformung in einer beheizten Form, wobei anschließend zwei das Bogenstück bildende Hälften miteinander verbunden werden. Die beiden freien Enden 13' des Bogenstückes 13 tauchen formausfüllend in Längsaussparungen 14 des Tunnelbodens 12 ein und sind dort in geeigneter Weise verschweißt oder verklebt, vergleiche Fig. 6. Aus dieser geht auch hervor, dass das Bogenstück 13 nahezu kreisringförmig gestaltet ist.

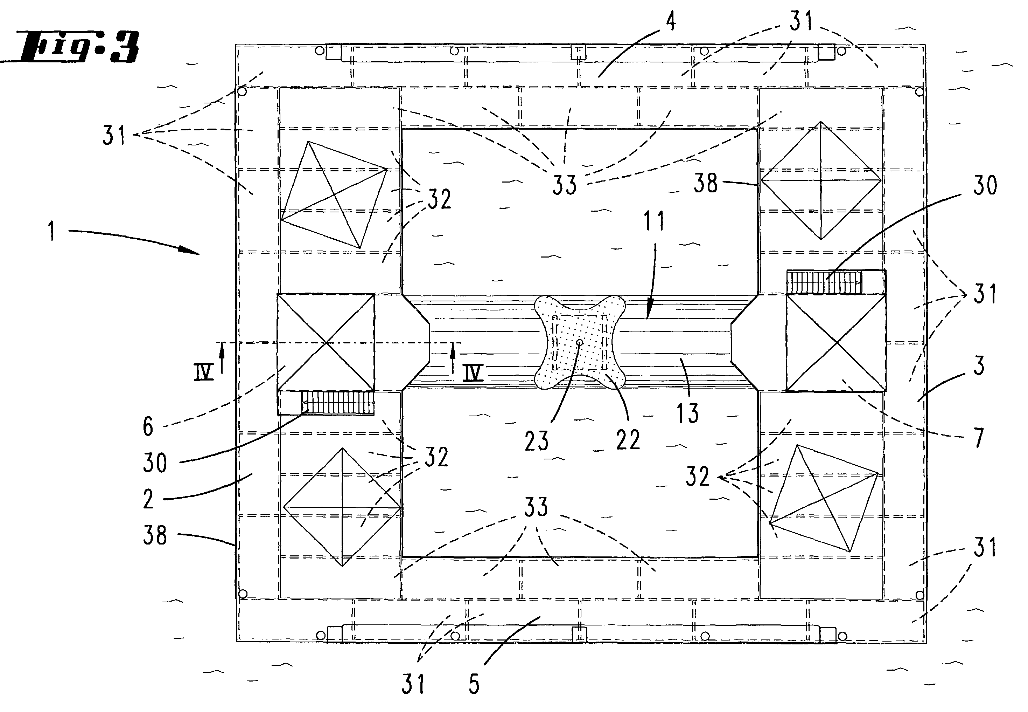

Gemäß der ersten Ausführungsform ist der Tunnel 11 etwa 10 m lang. Die Verbindung des Tunnels 11 mit den Niedergangsschächten 6, 7 erfolgt mittels an den Tunnelenden einverleibter Flansche 15. Jeder Flansch 15 stellt dabei ein in den Kunststoff eingegossenes Stahl-Befestigungselement dar. Jede Stirnseite des Tunnels 11 liegt in einer formangepassten Ausnehmung 16 der betreffenden Niedergangs-Schachtwand 9, 10 ein. Die auf den Tunnel 11 wirkenden Auftriebskräfte werden durch diesen Formschluss sicher aufgefangen, vergleiche insbesondere Fig. 4 und 5. Jeder Stirnseite des Bogenstücks 13 ist eine innerhalb der Ausnehmung 16 liegende Dichtung 17 zugeordnet. Zur Verbindung der Seitenwand 9, 10 mit dem Bogenstück 13 dienen die Seitenwände 9, 10 durchgreifende Befestigungsschrauben 18, welche in fluchtende Gewindebohrungen 19 der Flansche 15 eingreifen und somit den Tunnel 11 mit den Niedergangsschächten 6, 7 zu einer starren, hochstabilen Baueinheit verbinden.

Zumindest der unter der Wasserlinie W liegende Bereich des Niedergangsschachtes 6, 7 besteht aus durchsichtigem Kunststoff. Es kann auch hier wiederum Acrylglas eingesetzt sein.

Jeder Niedergangsschacht 6, 7 ist mit einer von der Plattform 20 des Schwimmkörpers ausgehenden Wendeltreppe 21 ausgestattet. Als Material für die Wendeltreppe eignet sich ebenfalls durchsichtiger Kunststoff.

Beim Ausführungsbeispiel ist dargestellt, dass der Tunnel 11 über seine gesamte Länge den gleichen Querschnitt besitzt. Beispielsweise ist es jedoch auch möglich, in der Tunnelmitte einen querschnittsvergrößerten Raum zu schaffen, um dort Unterbringungsmöglichkeiten für Stühle, kleine Tische etc. zu schaffen. Um den auf den Tunnel 11 einwirkenden Auftriebskräften entgegenzuwirken, ist in der Tunnelmitte ein Ballastkörper 22 vorgesehen. Dieser stellt beim Ausführungsbeispiel eine auf dem Tunnel 11 angeordnete Insel dar. Es besteht die Möglichkeit, die Insel zu begrünen und/oder ihr einen Mast 23 zuzuordnen, dessen Mastspitze beispielsweise ein Warnlicht tragen kann. Vorzugsweise ist die Masse des Ballastkörpers 22 variierbar.

Jeder Niedergangsschacht 6, 7 ist von je einer die Plattform 20 überragenden Kabine 24, 25 überbaut. Deren Grundriss entspricht demjenigen des Niedergangschachtes 6, 7. Beim Ausführungsbeispiel beinhalten die Kabinen 24, 25 sanitäre Anlagen 26 derart, dass beispielsweise die sanitären Anlagen 26 der Kabine 24 für Männer und die sanitären Anlagen der Kabine 25 für Frauen gedacht sind. In die Kabinen 24, 25 selbst gelangt man durch Eintrittsöffnungen 27. Die Kabinen 24 ,25 selbst können ihrerseits noch überbaut sein vom Aussichtsplattformen 28, 29. Zu diesen führen von der Plattform 20 des Schwimmkörpers 1 ausgehende Treppen 30.

Entlang seines gesamten Rahmenumfangs beinhaltet der Rahmen Auftriebskörper 31, welche ihrerseits ausgeschäumte Hohlkörper sein können. Sodann beinhaltet der rahmenförmige Schwimmkörper rahmeninnenseitige BallastTanks 32 in Form von parallel nebeneinanderliegenden Kunststoff-Hohlkörpern. Diese sind parallel zur Tunnelerstreckungsrichtung jeweils benachbart zu den Niedergangsschächten 6, 7 angeordnet. Einige dieser Ballasttanks 32 können mit Trinkwasser, andere mit Meerwasser gefüllt sein, während die noch verbleibenden Ballasttanks zur Aufnahme von Abwasser dienen können. Beim Ausführungsbeispiel sind beiderseits je eines Niedergangsschachtes 6, 7 je vier Ballastanks 32 vorgesehen. Ferner beinhaltet der Schwimmkörper 1 rahmeninnenseitige, klappenverschlossene Auftriebskammern 33. Diese können beispielsweise zur Aufnahme von Liegestühlen, Tischen, Sonnenschirmen etc. herangezogen sein. Auch können in ihnen elektrische Versorgungsbauteile Aufnahme finden.

Der Schwimmkörper 1 besitzt ein zerlegbares Gerüst 34, dessen horizontal verlaufende Träger 35 die Ballasttanks 32 tragen. Die zuunterst liegenden Horizontalträger 35 sind dabei von als Knotenbleche ausgebildeten Vertikalträgern 36 gestützt, welche ihrerseits an den Niedergangsschächten 6, 7 befestigt sind. Jeder Seite des Niedergangsschachtes 6, 7 sind dabei je zwei Horizontalträger 36' dreieckförmiger Grundrissform zugeordnet. Die Knotenbleche bzw. vertikalen Träger 36 sind mit Durchbrechungen 36' versehen, um Reflektionen gering zu halten. Anstelle dreieckförmiger Knotenbleche wären jedoch auch entsprechende Stützstreben einsetzbar. Für die Knotenbleche bzw. Vertikalträger 36 ist durchsichtiger Kunststoff verwendet. Zwecks Vergrößerung der begehbaren Fläche des Schwimmkörpers 1 können an den Außenseiten der Rahmenabschnitte 2 bis 5 angesetzte Plattformen vorgesehen sein.

Das zerlegbare Gerüst 34 sowie die Träger 35, 36 und Auftriebskörper sind so beschaffen, dass sie im zerlegten Zustand in mehreren 40-Fuß-Containern Platzaufnahme finden.

Der Aufbau des Schwimmkörpers erfolgt am Einsatzort. Montagetechnisch vorteilhaft ist es dabei, dass der obere Rand des Niedergangschachtes 6, 7 in eine Nut 37 am unteren Kabinenrand eingeklebt ist, vergleiche Fig. 4.

Um den erforderlichen Sicherungsvorschriften Rechnung zu tragen, ist der Plattform 20 sowohl rahmenaußenseitig als auch rahmeninnenseitig eine Reling 38 zugeordnet.

Insbesondere aus der Draufsicht in Fig. 3 geht hervor, dass der rahmeninnenliegende Wasserbereich beispielsweise als Schwimmbecken genutzt werden kann. Es ist auch möglich, den Schwimmkörper im Rahmen eines Delphinariums einzusetzen. Hierzu dient ein rund um den Schwimmkörper 1 gelegtes, bis zum Meeresboden reichendes oder bodenseitig geschlossenes Netz 39. Reicht dieses bis zum Meeresboden, kann beispielsweise der untere Netzrand durch entsprechende Gewichte beschwert sein zwecks Lagenstabilisierung des Netzes 39.

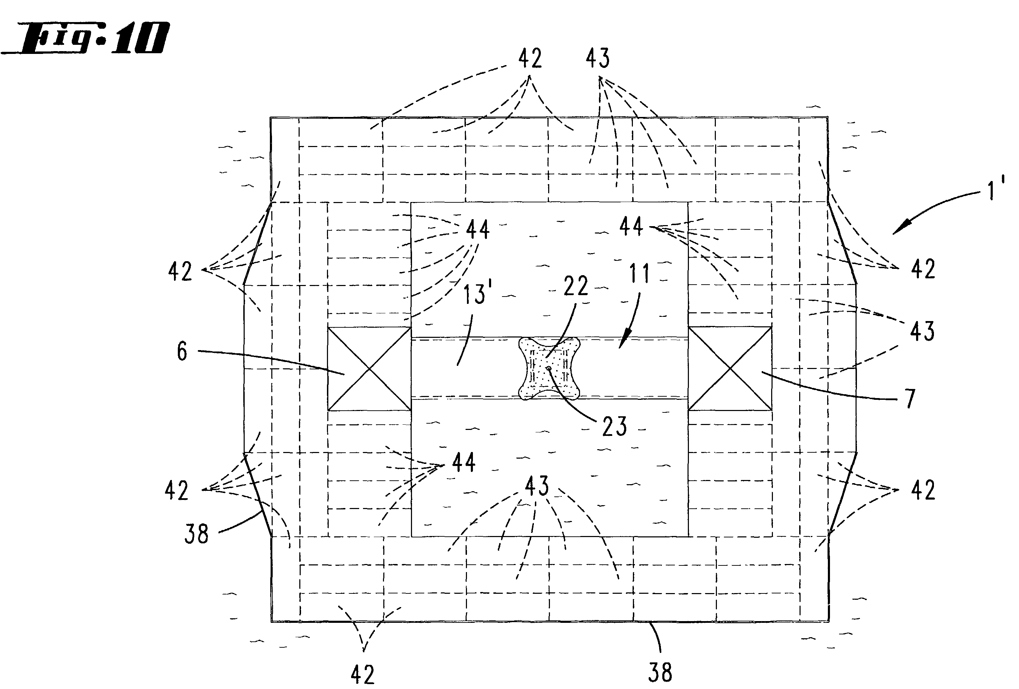

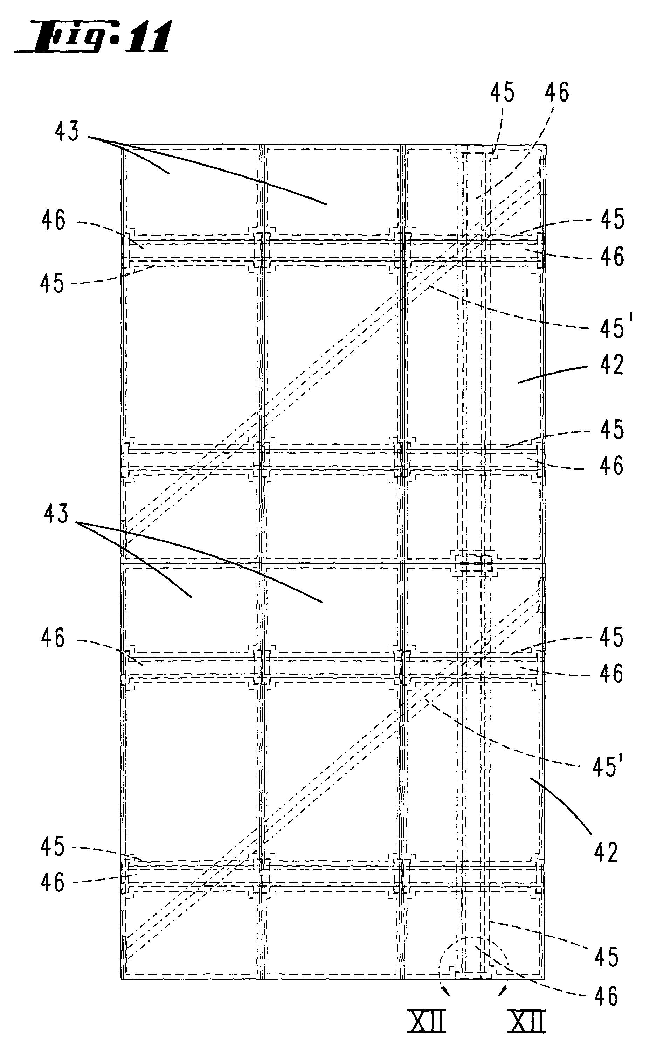

Die Abwandlung gemäß Fig. 8 und 9 zur ersten Ausführungsform zeigt auf, dass ein abweichend gestalteter Grundriss des Niedergangschachtes 6, 7 vorliegt. Die dem Tunnel 11 gegenüberliegende Seitenwand 40 verläuft nun in Form eines halbkreisförmigen Bogens, was Vorteile bei der Betrachtung der Unterwasserwelt bringt. Um den dichten Anschluss des unteren Randes der Kabine 24, 25 an den Niedergangsschacht 6, 7 gewährleisten zu können, ist der untere Kabinenrand mit Adapterzwickeln 41 ausgestattet, welche es erlauben, den unteren Kabinenrand dem oberen Rand des Niedergangschachtes 6, 7 anzupassen.

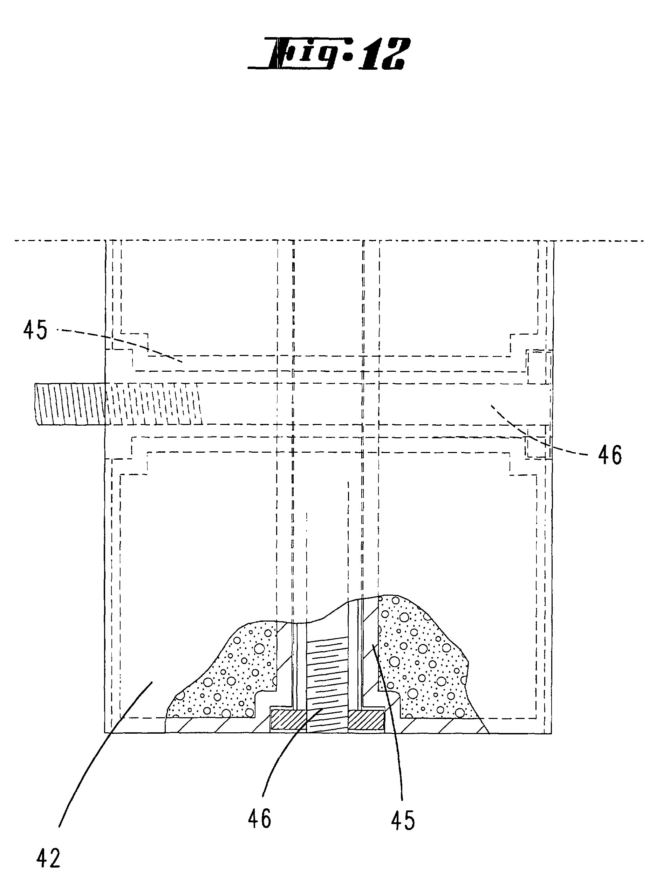

Die zweite Ausführungsform des Schwimmkörpers 1' gemäß Fig. 10 bis 14 entspricht weitgehend der ersten Ausführungsform. Gleiche Bauteile sind mit gleichen Bezugsziffern versehen. Der Schwimmkörper 1 beinhaltet eine Vielzahl miteinander verbundener Einzelelemente, welche ihrerseits in Form von quaderförmigen Hohlkörpern gestaltet sind. Die rahmenaußenseitig liegenden Einzelelemente sind ausgeschäumte Auftriebskörper 42. Zur Rahmeninnenseite hin erstrecken sich mit einer Klappe verschlossene Stauräume 43. Beiderseits jedes Niedergangsschachtes 6, 7 sind dann die auffüllbaren Ballasttanks 44 vorgesehen.

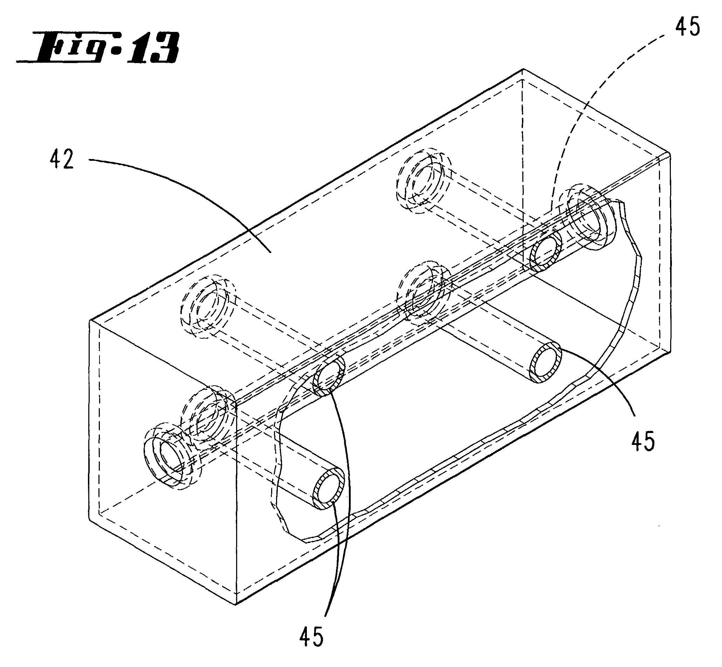

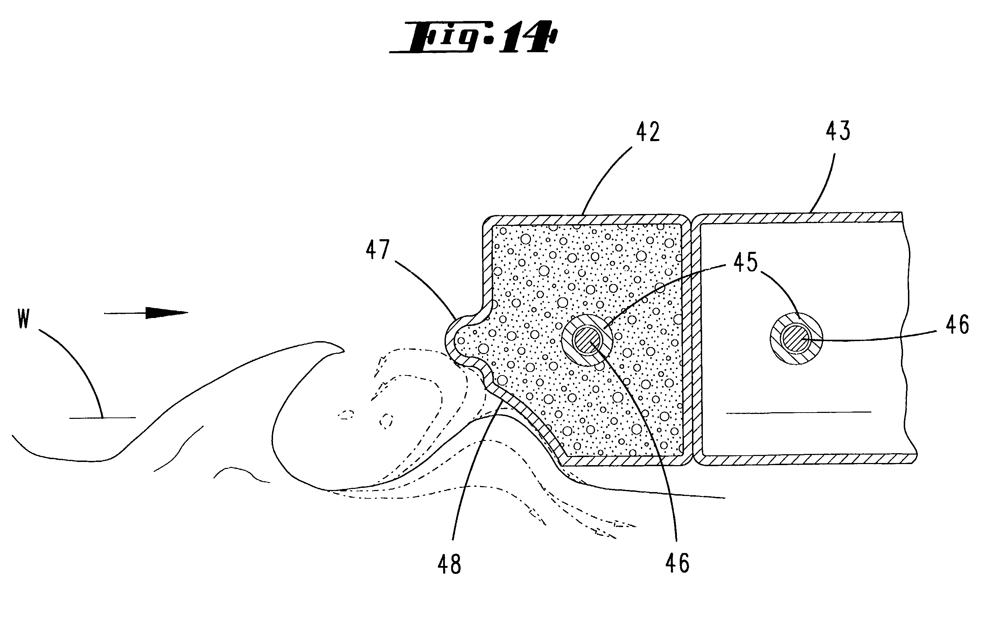

Die weitgehend einen gleichen Aufbau besitzenden Einzelelemente, nämlich die Auftriebskörper 42, die Stauräume 43 und Ballasttanks 44 bestehen aus Kunststoff und sind im Rotationsverfahren hergestellt. Bei diesem werden in den betreffenden Hohlkörpern 42, 43, 44 angeordnete, geradlinig verlaufende, in voneinander verschiedene Vertikalflächen mündende Rohre 45 als druckbeaufschlagbare Distanzstabilisierungselemente angeformt. Diese dienen zur Aufnahme von Spannelementen 46, wobei durch zumindest zwei zueinander fluchtenden Rohren 45 zweier Einzelelemente ein Spannelement 46 hindurch geführt ist. Die Verspannung kann dabei, wie Fig. 11 und 12 veranschaulicht, durch Verschraubung geschehen.

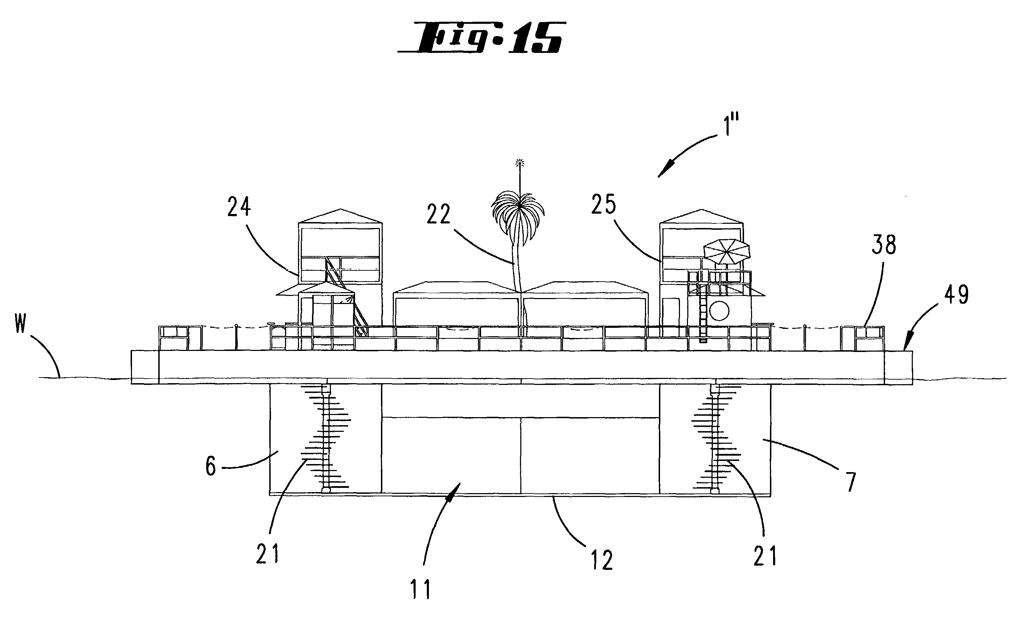

Insbesondere geht aus Fig. 13 hervor, dass die sich kreuzenden Rohre 45 so angeordnet sind, dass die Kreuzungsstellen in unterschiedlichen Ebenen liegen. Fig. 11 veranschaulicht mit strichpunktierten Linien, dass es möglich ist, dass die Rohre 45' auch schräg verlaufen können. Hierdurch lässt sich insgesamt eine hochstabile, gitterförmige Spannstruktur erstellen, verbunden mit dem Vorteil eines stabilen Schwimmkörpers.

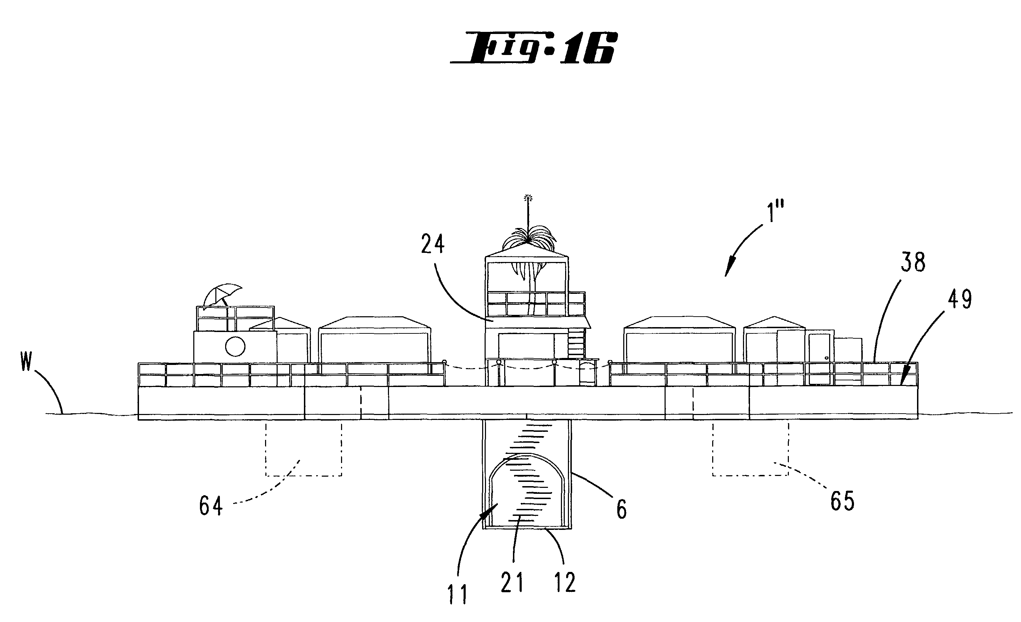

In Fig. 14 ist veranschaulicht, dass die randseitigen Einzelelemente, also die Auftriebskörper 42, einen angeformten Wellenbrecherwulst 47 beinhalten. Unterhalb desselben befindet sich zusätzlich eine Wellenausrollnische 48. Hierdurch wird erreicht, dass eine Welle nach unten abgeleitet wird und die Bildung von Spritzwasser dadurch erheblich reduziert ist. Eine weitere Funktion erfüllt der Wellenbrecherwulst 47 dadurch, dass er als umlaufende Scheuerleiste dient, so dass dies Vorteile beim Anlegen von Wasserfahrzeugen bringt, mittels welcher beispielsweise die den Schwimmkörper besuchenden Personen an- und abgefahren werden. Die Größe des vorstehend beschriebenen Schwimmkörpers ist so dimensioniert, dass maximal ca. 250 Personen Platz auf ihm finden können.

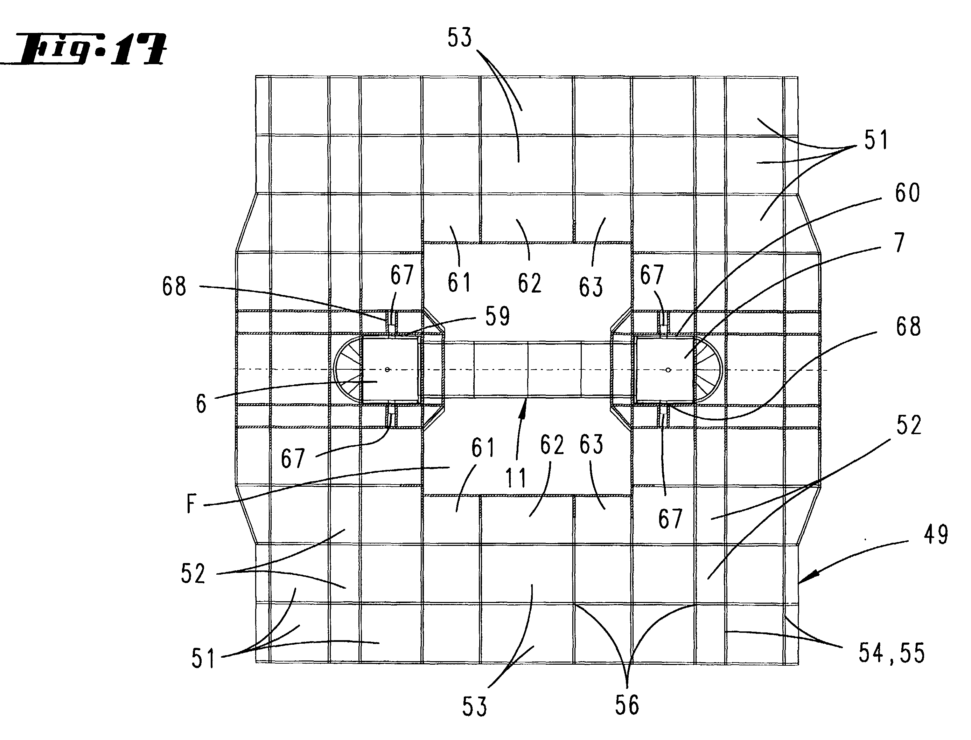

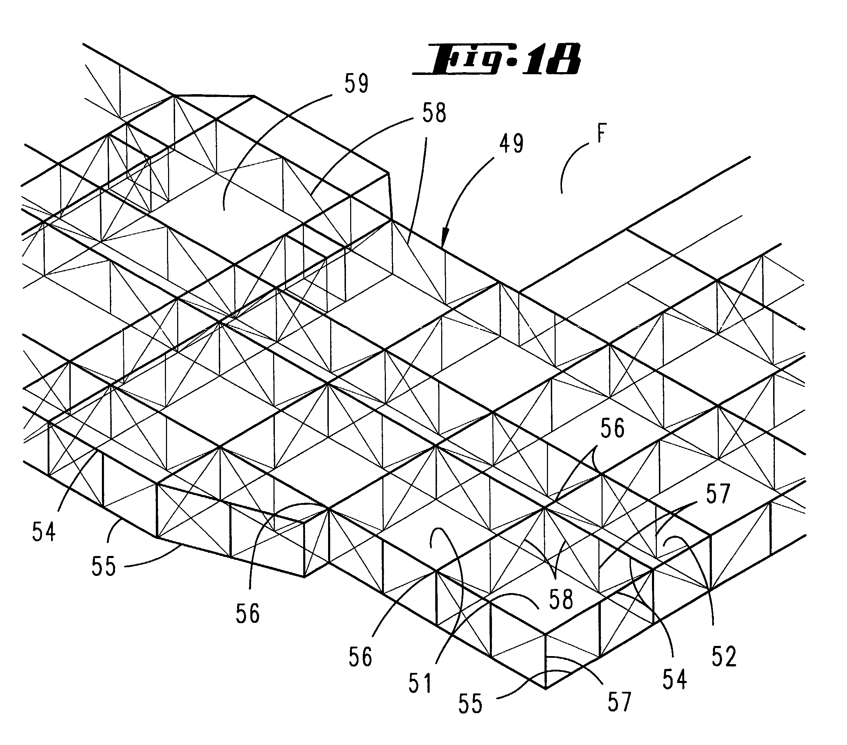

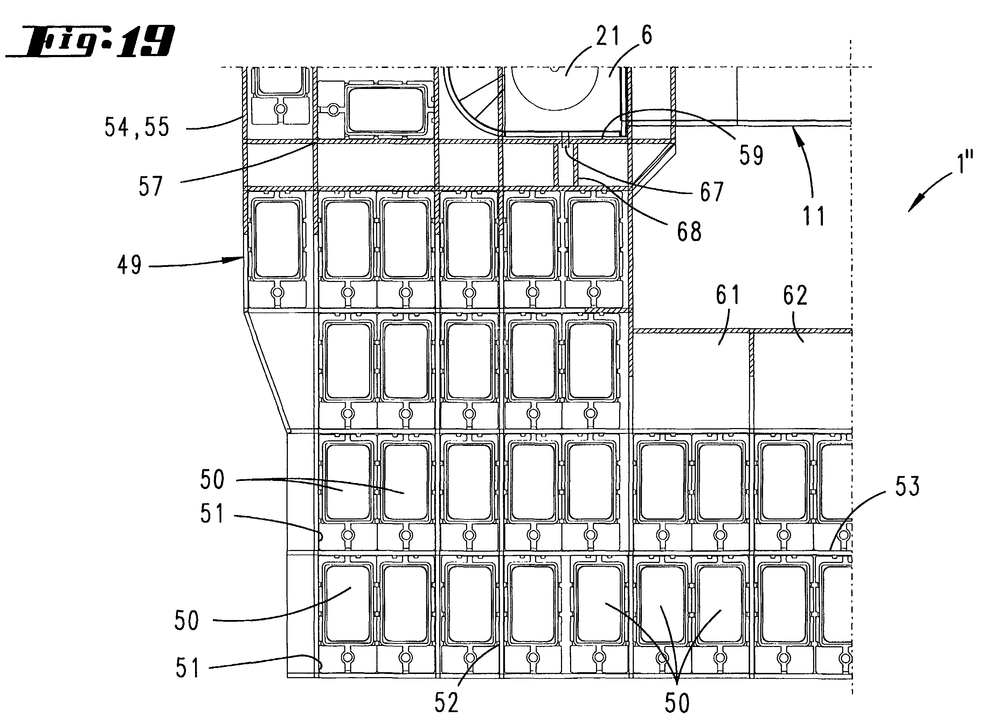

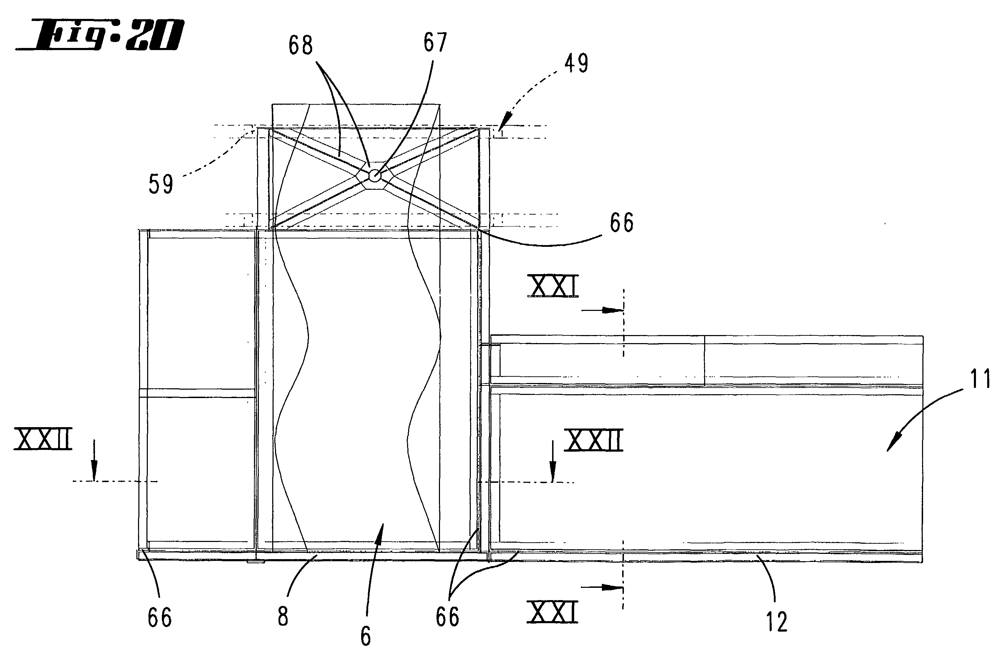

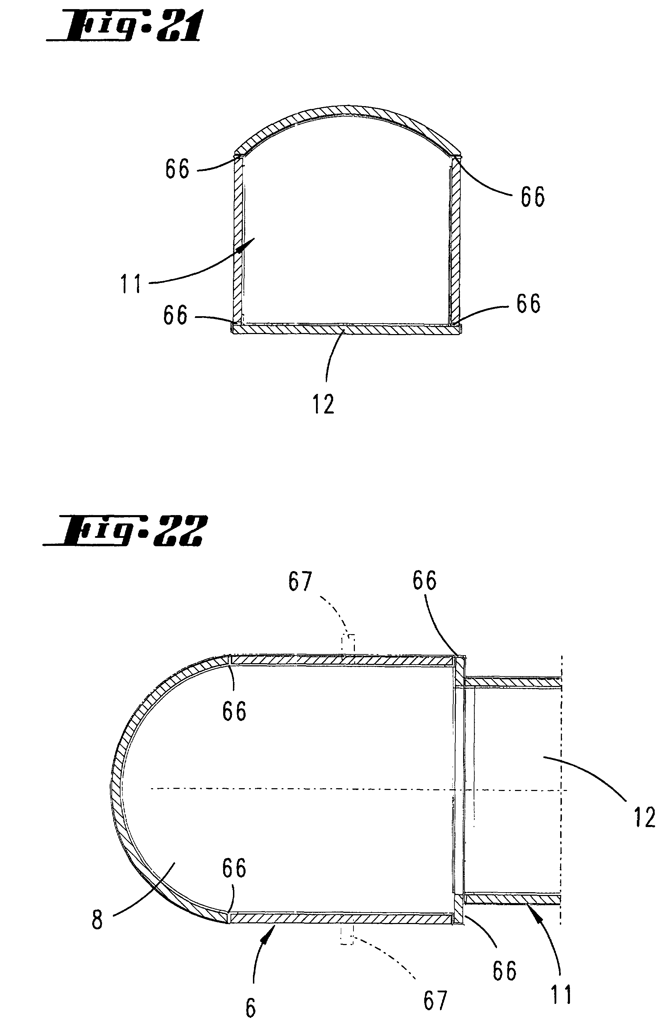

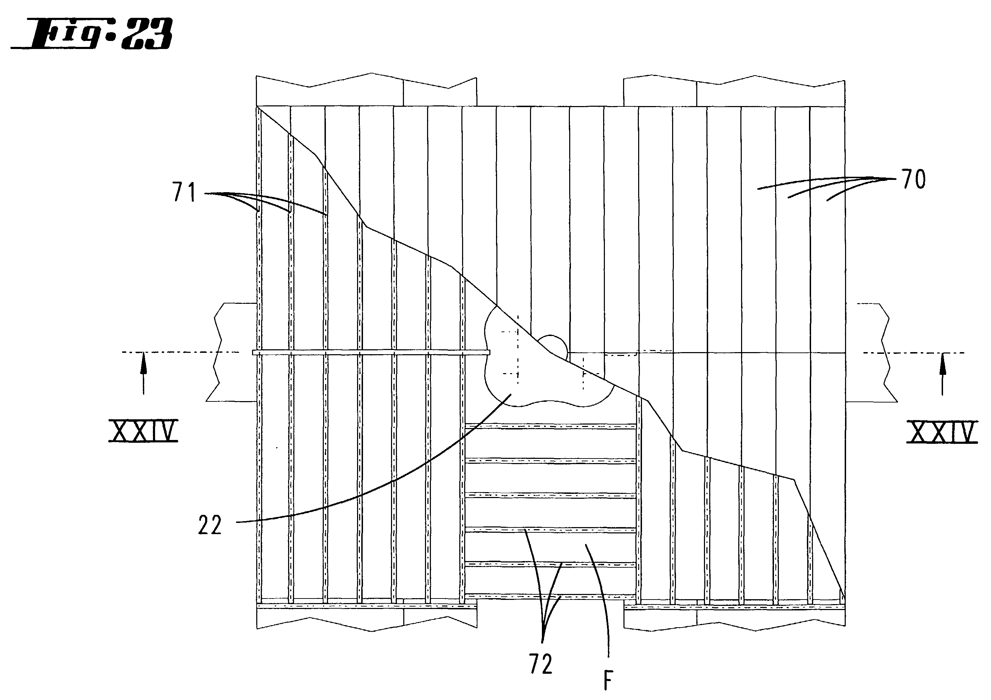

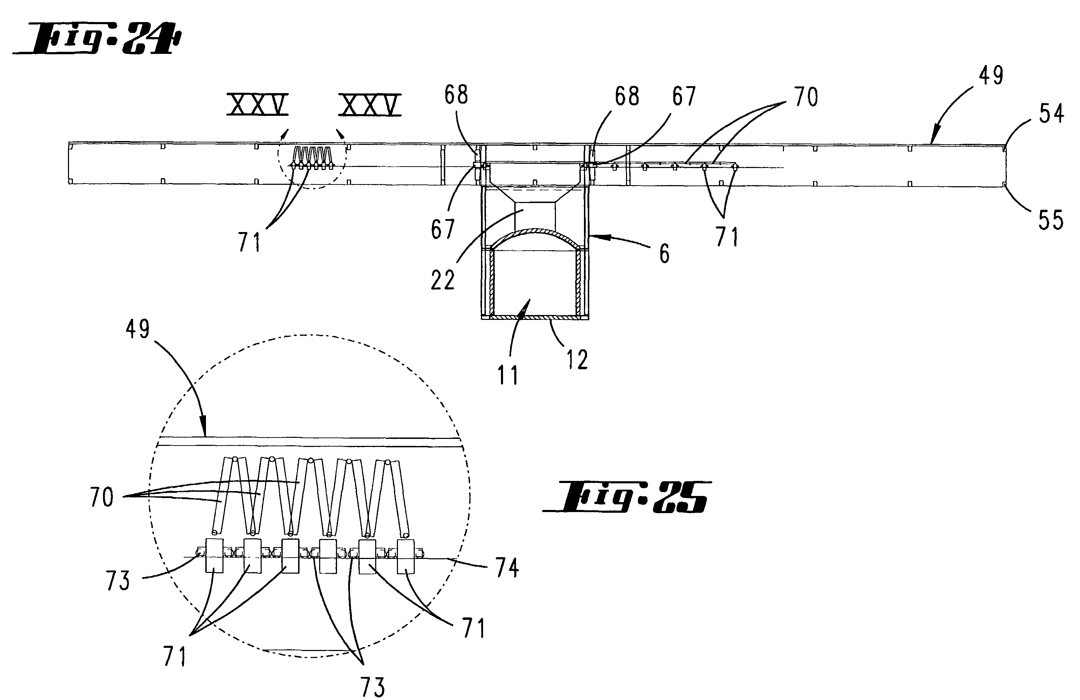

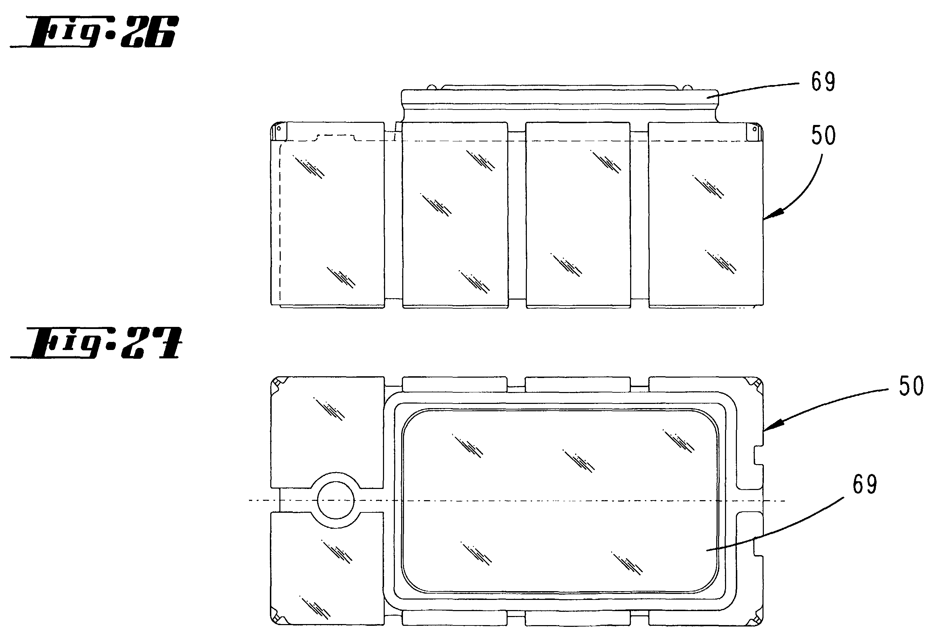

Der Schwimmkörper 1'' gemäß der dritten Ausführungsform, dargestellt den Figuren 15 bis 27, ist ebenfalls Träger eines Unterwassertunnels 11, und zwar dient hierzu ein biegesteifes Rahmentragwerk 49 in Form eines horizontalen Gitters. In dessen rechteckigen Gitterfreiräumen 51, 52, 53 sind als Tanks, Auftriebskörper, Ballastkörper, Staukammern oder dergleichen nutzbare Hohlkörper 50 befestigt.

Die die Gitterfreiräume 51, 52, 53 einfassenden Gitterstege weisen voneinander parallel beabstandete Oberund Unterstreben 54, 55 auf, deren Abstandslage durch den Gitterkreuzungspunkten 56 zugeordnete Vertikalstreben 57 definiert ist. Zusätzlich dienen zur Versteifung der Abstandslage der Ober- und Unterstreben 54, 55 zueinander Diagonalstreben 58.

Das Gittertragwerk 49 beinhaltet mittig eine im Wesentlichen rechteckig gestaltete Wasserfreifläche F. Den beiden sich gegenüberliegenden Längskanten der Wasserfreifläche F sind Gitterfreiräume 59, 60 benachbart, von welchen die Niedergangsschächte 6, 7 ausgehen, die ihrerseits durch den Tunnel 11 miteinander wasserdicht verbunden sind. Die den Niedergangsschächten 6, 7 benachbarten und die die Wasserfreifläche F begrenzenden Gitterstege bestehen aus Stahl, insbesondere Edelstahl, und sind gemäß Figur 17 durch Schraffur gekennzeichnet. Die sich anschließenden peripheren Gitterstege bestehen dagegen aus Fiberglas und sind gemäß Figur 17 ohne Schraffur gekennzeichnet.

Die quadratisch gestalteten Gitterfreiräume 51 sind so dimensioniert, dass sie jeweils zwei Hohlkörper 50 aufzunehmen vermögen. Die Gitterfreiräume 52 sind rechteckigen Grundriss und vermögen jeweils nur einen Hohlkörper 50 aufzunehmen. In den gegenüber den Gitterfreiräumen 51 größeren Gitterfreiräumen 53 können dagegen drei Hohlkörper 50 in Nebeneinanderlage vorgesehen sein.

Die den Schmalseiten der Wasserfreifläche F benachbarten Gitterfreiräume 61, 62 enthalten keine Hohlkörper. Dort können, wie aus der strichpunktierten Darstellung in Figur 16 ersichtlich ist, zusätzliche, bis unter Wasserlinie W ragende Tanks 64, 65 als Räumlichkeiten vorgesehen sein. Diese können beispielsweise zur Einnahme eines Imbisses etc. dienen. Auch diese Tanks 64, 65 können transparent gestaltet sein.

Bezüglich des Tunnels 11 und der Niedergangsschächte 6, 7 handelt es sich um durchsichtig beplankte Stahlrahmenkonstruktionen. Zu diesem Zweck sind Stahlrahmenprofile 66 unterschiedlicher Querschnittsform eingesetzt, welche mit den Tunnelwänden und dem Tunnelboden 12 sowie mit den Wänden der Niedergangsschächte 6, 7 beplankt sind. Bezüglich der entweder planen oder gebogenen Wände handelt es sich um solche aus transparentem Kunststoff bestehende Platten mit einer Stärke von ca. 100 mm.

Da auf den Tunnel 11 sowie die Niedergangsschächte 6, 7 erhebliche Auftriebskräfte einwirken und diese aufgefangen werden müssen, gehen von jedem Niedergangsschacht 6, 7 jeweils zwei seitlich abragende Tragzapfen 67 aus, die ihrerseits die Auftriebskräfte in den Tragzapfen 67 zugeordnete Joche 68 des Rahmentragwerks 49 ableiten. Diese Joche 68 sind ihrerseits benachbart den Gitterfreiräumen 59, 60 zu geordnet.

Bezüglich der Hohlkörper 50 handelt es sich im Wesentlichen um quaderförmige Tanks. Dieselben werden im Rotationsverfahren aus geeignetem Kunststoff hergestellt. Jeder Hohlkörper 50 besitzt eine Rechteckform und ist mit nicht näher bezeichneten Mitteln ausgestattet, um die Hohlkörper fest mit dem Rahmentragwerk zu verbinden. Diese Verbindungsmöglichkeit ist auch unter den Hohlkörpern 50 selbst gegeben. Jeder Hohlkörper ist mittels eines Deckels 69 verschließbar. Auf diese Weise ist es möglich, die Hohlkörper als Tanks oder Auftriebskörper einzusetzen. Ebenfalls können sie Ballastkörper darstellen, Staukammern etc.

Wie auch bei der ersten Ausführungsform ist dem Tunnel 11 ein als Insel gestalteter Ballastkörper 22 zugeordnet, welcher seinerseits sich mit seinem unteren Ende an der Tunneldecke abstützt. Der Ballastkörper 22 bzw. die von diesem gebildete Insel kann beispielsweise über einen nicht veranschaulichten Brückensteg ständig mit der Begehungsfläche des Rahmentragwerks 49 verbunden sein.

Beispielsweise für eine besondere Veranstaltung wie eine Tanzveranstaltung, kann die Wasserfreifläche F mit Platten 70 abgedeckt werden. Als Träger für die Platten 70 dienen vorzugsweise unter den Rändern des Rahmentragwerks bevorratete, über die Wasserfreifläche F verlagerbare Träger 71, 72. Diese sind an ihren Enden mit Rollen 73 bestückt, die ihrerseits über randseitige Schienen 74 rollen. Die Platten 70 befinden sich in in der Bevorratungsstellung in fächerartiger, mittels Scharniere verbundener Nebeneinanderlage unterhalb der Regelungsfläche des Rahmentragwerks 40. Einhergehend mit einem Verfahren der Träger 71, 72 in die Tragstellung werden die Platten 70 in eine plane Ebene zueinander gebracht, so dass die gesamte Begehungsfläche des Rahmentragwerks zusätzlich um die Größe der Wasserfreifläche F vergrößert wird. Figur 24, linke Seite und Figur 25 zeigen die Bevorratungsposition der Träger 71, während die rechte Seite in Figur 24 die Stützstellung der Träger 71 veranschaulicht.

## Patentansprüche

1. Schwimmkörper mit einem zwischen zwei Niedergangsschächten (6, 7) sich erstreckenden, unter der Wasserlinie liegenden Tunnel (11) mit zumindest teilweise transparenter Wand, und wobei die Niedergangsschächte (6, 7) einem Auftriebskörper und Ballastkörper aufweisenden, auf dem Wasser schwimmenden Rahmen (2, 3) zugeordnet sind, der eine Wasserfreifläche umgrenzt und der Tunnel (11) die Wasserfreifläche (F) unterquert.

2. Schwimmkörper nach Anspruch 1, **dadurch gekennzeichnet, dass** der Tunnel (11) die Wasserfreifläche (F) etwa mittig unterquert.

3. Schwimmkörper nach einem der vorhergehenden Ansprüche, **gekennzeichnet durch** ein biegesteifes Rahmentragwerk (34,49) in Form eines horizontalen Gitters, in dessen rechteckigen, insbesondere quadratischen Gitterfreiräumen (51, 52, 53) als Tanks, Auftriebskörper, Ballastkörper, Staukammern oder dergleichen nutzbare Hohlkörper (31, 50) befestigt sind.

4. Schwimmkörper nach einem der vorhergehenden Ansprüche, **dadurch gekennzeichnet, dass** die Niedergangsschächte (6,7) zwei einander gegenüberliegenden Rahmenabschnitten (2, 3) zugeordnet sind.

5. Schwimmkörper nach einem oder mehreren der vorhergehenden Ansprüche, **dadurch gekennzeichnet, dass** der Tunnel (11) einen transparenten Boden (12) besitzt und/oder, dass die Tunnelwand insgesamt durchsichtig ist.

6. Schwimmkörper nach einem oder mehreren der vorhergehenden Ansprüche, **dadurch gekennzeichnet, dass** zumindest der unter der Wasserlinie (W) liegende Bereich des Niedergangsschachtes (6,7) aus durchsichtigem Kunststoff besteht.

7. Schwimmkörper nach einem oder mehreren der vorhergehenden Ansprüche, **dadurch gekennzeichnet, dass** die Niedergangsschächte (6,7) von Kabinen (24, 25) überbaut sind.

8. Schwimmkörper nach einem oder mehreren der vorhergehenden Ansprüche, **gekennzeichnet durch** sich nahezu entlang des gesamten Rahmenumfanges erstreckende Auftriebskörper (31, 42, 50).

9. Schwimmkörper nach einem oder mehreren der vorhergehenden Ansprüche, **dadurch gekennzeichnet**, das der Schwimmkörper (1,1") ein zerlegbares Gerüst (34, 49) aus Trägern aufweist.

10. Schwimmkörper nach einem oder mehreren der vorhergehenden Ansprüche, **dadurch gekennzeichnet, dass** der Tunnel (11) und die Niedergangsschächte (6,7) jeweils durchsichtig beplankte Rahmen-Konstruktionen sind.

11. Schwimmkörper nach einem oder mehreren der vorhergehenden Ansprüche, **dadurch gekennzeichnet, dass** die Wasserfreifläche mit Platten (70) abdeckbar ist.

## Claims

1. Floating body having a tunnel (11), which extends between two companionways (6, 7), lies below the waterline and has an at least partially transparent wall, and wherein the companionways (6, 7) are associated with a frame (2, 3) which has buoyancy bodies and ballast bodies, floats on the water and surrounds an area of open water, and the tunnel (11) crosses below the area of open water (F).

2. Floating body according to Claim 1, **characterized in that** the tunnel (11) crosses below the area of open water (F) approximately centrally.

3. Floating body according to one of the preceding claims, **characterized by** a flexurally rigid supporting framework (34, 49) in the form of a horizontal grid, in the rectangular, in particular square open grid spaces (51, 52, 53) of which hollow bodies (31, 50), which can be used as tanks, buoyancy bodies, ballast bodies, storage chambers or the like, are secured.

4. Floating body according to one of the preceding claims, **characterized in that** the companionways (6, 7) are associated with two frame sections (2, 3) which lie opposite one another.

5. Floating body according to one or more of the preceding claims, **characterized in that** the tunnel (11) has a transparent floor (12), and/or **in that** the tunnel wall as a whole is see-through.

6. Floating body according to one or more of the preceding claims, **characterized in that** at least the area of the companionway (6, 7) which lies below the waterline (W) consists of see-through plastics.

7. Floating body according to one or more of the preceding claims, **characterized in that** the companionways (6, 7) have cabins (24, 25) built above them.

8. Floating body according to one or more of the preceding claims, **characterized by** buoyancy bodies (31, 42, 50) which extend virtually along the entire frame periphery.

9. Floating body according to one or more of the preceding claims, **characterized in that** the floating body (1, 1'') has a dismantleable framework (34, 49) comprising carriers.

10. Floating body according to one or more of the preceding claims, **characterized in that** the tunnel (11) and the companionways (6, 7) are each see-through planked frame structures.

11. Floating body according to one or more of the preceding claims, **characterized in that** the area of open water can be covered by boards (70).

## Revendications

1. Corps flottant, avec un tunnel (11) placé sous la ligne de flottaison, s'étendant entre deux puits de descente (6, 7), avec une paroi au moins partiellement transparente et où les puits de descente (6, 7) sont associés à un cadre (2, 3) flottant sur l'eau, présentant un corps de flottaison et un corps de ballast, cadre circonscrivant une surface libre d'eau et le tunnel (11) traversant par le dessous la surface libre d'eau (F).

2. Corps flottant selon la revendication 1, **caractérisé en ce que** le tunnel (11) traverse par le dessous la surface libre d'eau (F) à peu près centralement.

3. Corps flottant selon l'une des revendications précédentes, **caractérisé par** un ouvrage porteur formé en cadre (34, 49), présentant une rigidité en flexion, ayant la forme d'une grille ou réseau horizontal(e), dans les espaces libres de grille ou réseau (51, 52) rectangulaires, en particulier carrés, réalisés sous forme de réservoirs, sont fixés des corps de flottaison, des corps de ballast, des chambres d'accumulation, ou des corps creux (31, 50) utilisables analogues.

4. Corps flottant selon l'une des revendications précédentes, **caractérisé en ce que** les puits de descente (6, 7) sont associés à deux tronçons de cadre (2, 3) opposés l'un à l'autre.

5. Corps flottant selon l'une ou plusieurs des revendications précédentes, **caractérisé en ce que** le tunnel (11) comporte un fond (12) transparent et/ou **en ce que** la paroi de tunnel est globalement transparente.

6. Corps flottant selon l'une ou plusieurs des revendications précédentes, **caractérisé en ce qu'**au moins la zone, située sous la ligne de flottaison (W) du puits de descente (6, 7) est formée d'une matière synthétique transparente.

7. Corps flottant selon l'une ou plusieurs des revendications précédentes, **caractérisé en ce que** les puits de descente (6, 7) sont dotés de cabines (24, 25) en superstructure.

8. Corps flottant selon l'une ou plusieurs des revendications précédentes, **caractérisé par** des corps de flottaison (31, 42, 50), s'étendant à peu près le long de l'ensemble de la périphérie du cadre.

9. Corps flottant selon l'une ou plusieurs des revendications précédentes, **caractérisé en ce que** le corps flottant (1, 1") présente un bâti (39, 49) décomposable, formé de poutres.

10. Corps flottant selon l'une ou plusieurs des revendications précédentes, **caractérisé en ce que** le tunnel (11) et les puits de descente (6, 7) sont chacun des constructions en cadre, recevant un bordage transparent.

11. Corps flottant selon l'une ou plusieurs des revendications précédentes, **caractérisé en ce que** la surface libre de l'eau est susceptible d'être recouverte de plaques (70).
